Europäisches Patentamt

European Patent Office

Office européen des brevets

(11) Veröffentlichungsnummer: **0 450 358 A1**

# EUROPÄISCHE PATENTANMELDUNG

(21) Anmeldenummer: 91103890.9

(22) Anmeldetag: 14.03.91

(51) Int. Cl.5: **B62K 19/22**

(30) Priorität: 04.04.90 AT 793/90

(43) Veröffentlichungstag der Anmeldung:
09.10.91 Patentblatt 91/41

(84) Benannte Vertragsstaaten:
BE CH DE ES FR GB IT LI NL SE

(71) Anmelder: Austria Metall Aktiengesellschaft

A-5282 Braunau am Inn(AT)

(72) Erfinder: Braun, Adolf
Mozartstrasse 32
A-5280 Braunau/Inn(AT)
Erfinder: Üblacker, Peter
Schilfgasse 4
A-5111 Bürmoos(AT)

(74) Vertreter: WILHELMS, KILIAN & PARTNER
Patentanwälte
Eduard-Schmid-Strasse 2
W-8000 München 90(DE)

(54) Verbindung zwischen Rohren und Knoten von Rahmen, insbesondere Fahrradrahmen.

(57) Verbindung zwischen Rohren und Knoten von Rahmen, insbesondere Fahrradrahmen, wobei der Knoten (4) einen Ansatz (5) aufweist, der in das Rohr (1) ragt und der Knoten eine zu seiner Längsachse konzentrische Ausnehmung (6) aufweist, in die ein um das Rohr an diesem angeordneter Stutzen (2) ragt, wobei die umlaufenden Spalten (7,8,9) zwischen Rohr und Ansatz, Ansatz und Stutzen und Stutzen und Rohr mit Kleber (10) gefüllt sind.

Fig. 1

Die Erfindung bezieht sich auf eine Verbindung zwischen Rohren und Knoten von Rahmen, insbesondere Fahrradrahmen, wobei der Knoten einen Ansatz aufweist, der in das Rohr ragt.

Es sind Verbindungen bekannt, bei denen ein Ansatz am Knoten angeordnet ist, über dem das Rahmenrohr geschoben ist und der Spalt zwischen beiden mit Kleber gefüllt ist. Solche Verbindungen sind in ihrer Festigkeit aber sehr von der Qualität ihrer Verklebung abhängig. Die Klebeflächen zwischen den beiden Teilen müssen relativ groß sein und die Länge der Fläche größer im Vergleich zum Durchmesser des Rohres. Es wurde daher eine Verbindung zwischen Rohren und Knoten von Rahmen geschaffen, die diese Nachteile vermeidet.

Diese ist so gestaltet, daß der Knoten eine zu seiner Längsachse konzentrische Ausnehmung aufweist, in die ein um das Rohr an diesem angeordneter Stutzen ragt, wobei die umlaufenden Spalten zwischen Rohr und Ansatz, Ansatz und Stutzen und Stutzen und Rohr mit Kleber gefüllt sind.

Durch die doppelte Klebefläche ist diese weitaus fester, als herkömmliche Verbindungen. Diese Ausführung kann die Belastungen gut zwischen dem Stutzen und dem Rohr verteilen und somit kann die Wandstärke des Rohres als auch des Ansatzes klein gehalten werden. Dadurch ist eine sehr gewichtssparende Bauweise gegeben.

In weiterer Ausgestaltung ist es günstig, daß sowohl die Ausnehmung des Ansatzes, als auch der mit diesem Ansatz kooperierende Teil des Stutzens eine sich in Richtung Knoten hin verjüngende, vorzugsweise konische Form aufweist.

Diese Bauform ist leicht herzustellen und die verjüngende Form des Stutzens ist eine gute Verteilung des Klebestoffes erreicht.

Es ist weiters günstig, daß im Bereich der Anordnung des Stutzens am Rohr beide miteinander kooperierende Flächen umlaufende Sicken aufweisen. Diese Befestigung des Stutzens ist sehr einfach und die Verbindung erzeugt keine Kerbwirkungen am Rohr.

Es ist erfindungsgemäß günstig, eine Rohrverbindung dieser Art so herzustellen, daß der Stutzen am Rohr durch gemeinsames Sicken, vorzugsweise mittels Magnetumformen, befestigt wird, in den Raum zwischen Rohr und Stutzen Kleber gebracht wird und der Ansatz des Knotens darauf in das Rohr eingeschoben wird, bis die Ausnehmung des Ansatzes und der mit dieser kooperierende Teil des Stutzens aneinander zu liegen kommen.

Der Kleber wird beim Zusammenschieben von Rohr bzw. Stutzen und Ansatz des Rahmenknotens aus dem Bereich des Zusammentreffens von Rohr und Stutzen verdrängt und in die umlaufenden Klebespalten gepreßt. Somit ist eine gute Verteilung des Klebers in den Spalten gegeben.

Durch die konische Ausführung der Klebeflächen zwischen Rahmenknoten und Stutzen wird eine zusätzliche Vorspannung des Klebers in diesen Flächen beim Zusammenschieben von Ansatz und Rohr bzw. Stutzen erzeugt. Durch diese Maßnahmen wird der Kleber gut verdichtet und seine Festigkeit maximal ausgenützt.

Die Erfindung wird anhand nachstehender Zeichnungen beschrieben. Es zeigen:

Fig. 1    eine erfindungsgemäße Verbindung im zusammengebauten Zustand.

Fig. 2    eine erfindungsgemäße Verbindung nach Einbringen des Klebers und vor Zusammenschieben der Teile.

Im Rohr 1 ist der Stutzen 2 durch die gemeinsame Sicke 3 befestigt. Der Knoten 4 weist den Ansatz 5 auf, der in das Rohr 1 ragt. Der Ansatz 5 besitzt eine konische Ausnehmung 6 zu seiner Längserstreckung 11, in die der Stutzen 2 ragt. Die umlaufenden Spalten, nämlich Spalte 7 zwischen Rohr 1 und Ansatz 5, Spalte 8 zwischen Ansatz 5 und Stutzen 2 und Spalte 9 zwischen Rohr 1 und Stutzen 2 sind mit Kleber 10 gefüllt. Das konische Ende des Stutzens 2 kann durch Drücken oder durch Magnetumformen erzeugt werden, wobei in den zu konifizierenden Teil des Stutzens 2 ein Stützkörper eingeschoben und der Feldformer um den Stutzen 2 angeordnet wird. Auf diese Art ist eine besonders exakte Formgebung des Stutzens 2 möglich.

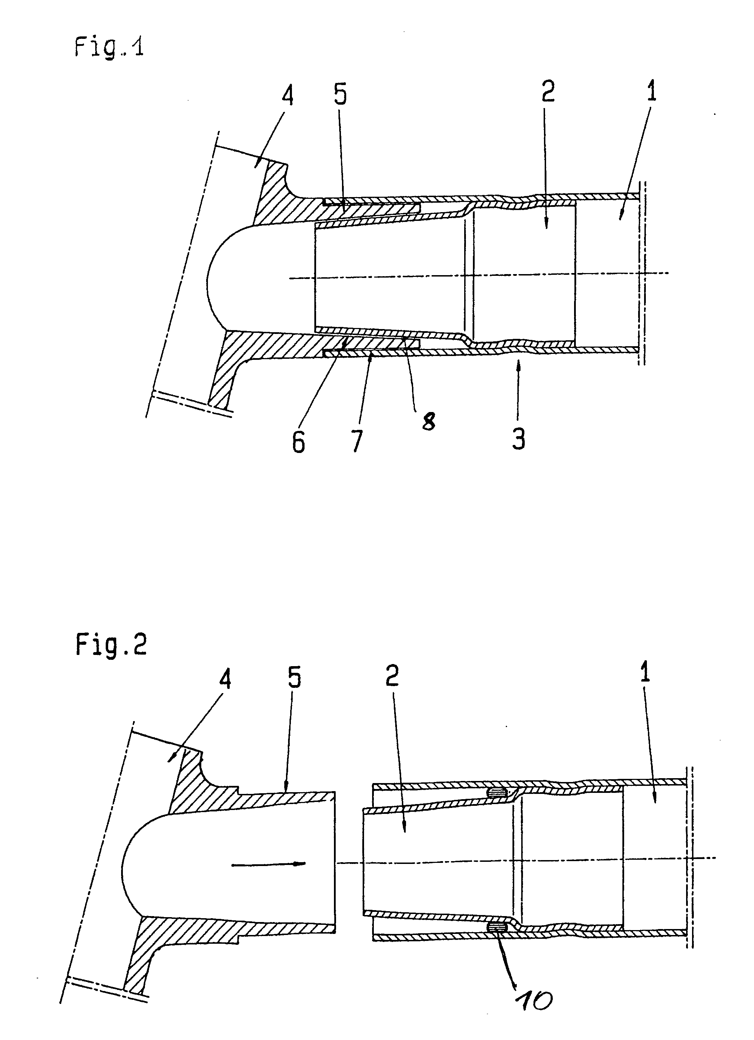

Fig. 2 zeigt die Verbindung vor dem Zusammenfügen, wobei der Kleber 10 im Bereich des Aneinandertreffens von Stutzen 2 und Rohr 1 eingebracht ist.

## Patentansprüche

1. Verbindung zwischen Rohren und Knoten von Rahmen, insbesondere Fahrradrahmen, wobei der Knoten einen Ansatz aufweist, der in das Rohr ragt, dadurch gekennzeichnet, daß der Knoten (4) eine zu seiner Längsachse konzentrische Ausnehmung (6) aufweist, in die ein um das Rohr (1) an diesem angeordneter Stutzen (2) ragt, wobei die umlaufenden Spalten (7, 8, 9) zwischen Rohr (1) und Ansatz (5), Ansatz (5) und Stutzen (2) und Stutzen (2) und Rohr (1) mit Kleber (10) gefüllt sind.

2. Verbindung nach Anspruch 1, dadurch gekennzeichnet, daß sowohl die Ausnehmung (6) des Ansatzes (5), als auch der mit diesem Ansatz (5) kooperierende Teil des Stutzens (2) eine sich in Richtung Knoten (4) hin verjüngende, vorzugsweise konische Form aufweist.

3. Verbindung nach einem der vorhergehenden Ansprüche, dadurch gekennzeichnet, daß im Bereich der Anordnung des Stutzens (2) am Rohr (1) beide miteinander kooperierende Flächen umlaufende Sicken (3) aufweisen.

4. Verfahren zur Herstellung einer Rohrverbindung nach einem der vorhergehenden Ansprüche, dadurch gekennzeichnet, daß der Stutzen (2) am Rohr (1) durch gemeinsames Sicken, vorzugsweise mittels Magnetumformen, befestigt wird, in den Raum zwischen Rohr (1) und Stutzen (2) Kleber (10) gebracht wird und der Ansatz (5) des Knotens (4) darauf in das Rohr (1) eingeschoben wird, bis die Ausnehmung (6) des Ansatzes (5) und der mit dieser kooperierende Teil des Stutzens (2) aneinander zu liegen kommen.

Fig..1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 569 817 (P.VIELLARD)<br>* das ganze Dokument *<br>— — — | 1,3 | B 62 K 19/22 |
| A | DE-C-9 589 2 (J.SPENCER)<br>* das ganze Dokument *<br>— — — | 1 | |
| A | US-A-4 721 407 (K.LIU)<br>* Spalte 2, Zeilen 36 - 41; Figuren 1-5 *<br>— — — — — | 1 | |
| | | | **RECHERCHIERTE SACHGEBIETE (Int. Cl.5)**<br><br>B 62 K<br>F 16 L |

Der vorliegende Recherchenbericht wurde für alle Patentansprüche erstellt

| Recherchenort | Abschlußdatum der Recherche | Prüfer |
|---|---|---|
| Den Haag | 04 Juli 91 | CZAJKOWSKI A.R. |